# EUROPÄISCHE PATENTANMELDUNG

(11) **EP 4 477 809 A1**
(43) Veröffentlichungstag der Anmeldung: **18.12.2024**
(21) Anmeldenummer: 24177303.5
(22) Anmeldetag: 22.05.2024
(51) Int. Cl.: E03C 1/04, E03C 1/05, F24D 17/00, E03B 7/00, E03B 7/08

(54) **SANITÄRARMATUR UND SANITÄRARMATURENSYSTEM**

(30) Priorität: 12.06.2023 DE 102023115254
(71) Anmelder: Viega Technology GmbH & Co. KG, 57439 Attendorn (DE)
(72) Erfinder: Görke, Daniel, 57368 Lennestadt (DE); Knupfer, Daniel, 7205 Zizers (CH); Knupfer, Thomas, 7302 Landquart (CH); Robinson, Eric, 7016 Trin-Mulin (CH)
(74) Vertreter: Cohausz & Florack

(57) **Zusammenfassung**

Die Erfindung betrifft eine Sanitärarmatur (1) umfassend einen Armaturenkörper (1.1), einen Wasseranschluss (2), einen Wasserauslauf (3) oder Wasserausgang und ein einen Hebel (4.1) aufweisendes bewegliches Bedienelement (4), wobei der Hebel (4.1) zum Steuern einer Wassertemperatur um eine erste Drehachse (5) drehbar und zum Steuern eines Wasserflusses um eine zweite Drehachse (6) kippbar ist. Erfindungsgemäß ist in dem Armaturenkörper eine Sensorvorrichtung (10) zur Erfassung verschiedener Positionen des Hebels (4.1) des beweglichen Bedienelements relativ zu einer festgelegten Position des Armaturenkörpers (1.1) angeordnet. Die Sanitärarmatur (1) kann vorteilhaft mit einer mittels des Bedienelements (4) elektronisch steuerbaren Mischeinheit (11) kombiniert werden, wobei die Mischeinheit einen Anschluss (12) für Kaltwasser, einen Anschluss (13) für Warmwasser, einen Anschluss (14) für eine mit der Sanitärarmatur verbindbare Mischwasserleitung (15), mindestens zwei unabhängig voneinander steuerbare Ventile (16, 17) zur Einstellung von Temperatur und Volumenstrom des über den Anschluss für die Mischwasserleitung abzugebenden Mischwassers und die Ventile steuernde Antriebe (18, 19) aufweist. Die erfindungsgemäße Sanitärarmatur (1) bietet eine intuitive manuelle Bedienung zur Einstellung von Wassertemperatur und Volumenstrom und ermöglicht eine verbesserte Hygienespülung.

## Beschreibung

Die Erfindung betrifft eine Sanitärarmatur umfassend einen Armaturenkörper, einen Wasseranschluss, einen Wasserauslauf oder Wasserausgang und ein einen Hebel aufweisendes bewegliches Bedienelement, wobei der Hebel zum Steuern einer Wassertemperatur um eine erste Drehachse drehbar und zum Steuern eines Wasserflusses um eine zweite Drehachse kippbar ist.

Des Weiteren betrifft die Erfindung ein Sanitärarmaturensystem mit einer Sanitärarmatur der voranstehend genannten Art und einer der Sanitärarmatur zugeordneten, mittels des Bedienelements elektronisch steuerbaren Mischeinheit, wobei die Mischeinheit einen Anschluss für Kaltwasser, einen Anschluss für Warmwasser, einen Anschluss für eine mit der Sanitärarmatur verbindbare Mischwasserleitung, mindestens zwei unabhängig voneinander steuerbare Ventile zur Einstellung von Temperatur und Volumenstrom des über den Anschluss für die Mischwasserleitung abzugebenden Mischwassers und die Ventile steuernde Antriebe aufweist.

Unter Armaturen in der Sanitär- bzw. Rohrleitungstechnik werden insbesondere Vorrichtungen verstanden, die zum Absperren und Steuern eines Fluidflusses (z. B. Wasserflusses) dienen. Es sind verschiedene Arten von Armaturen bekannt, die insbesondere in Bädern und Küchen verwendet werden.

Bei der sogenannten Mischbatterie - auch Zweigriffarmatur genannt - werden der Warmwasserfluss und der Kaltwasserfluss unabhängig voneinander mittels zweier Griffe gesteuert. Da die Wassertemperatur bei jedem Wasserzapfvorgang neu eingestellt werden muss, ist der Verbrauch ungenutzten Wassers bei solchen Armaturen hoch.

Beim sogenannten Einhebelmischer werden der Wasserfluss und die Wassertemperatur mittels eines einzelnen hebelförmigen Griffs gesteuert. Da sich die gewünschte Wassertemperatur beim Einhebelmischer schneller einstellen lässt als bei der Mischbatterie, ermöglicht der Einhebelmischer einen sparsameren Wasserverbrauch. Ein weiterer Vorteil eines Einhebelmischers liegt auch darin, dass sich mit ihm Wassertemperatur und Volumenstrom intuitiv vom Benutzer über eine Handbewegung einstellen lassen.

Herkömmliche Einhebelmischer können jedoch keiner automatischen Hygienespülung unterzogen werden, da das in ihnen angeordnete Ventil rein mechanisch ausgeführt ist und der zugehörige Hebel zum Öffnen und Schließen des Ventils manuell betätigt werden muss.

Automatische Hygienespülungen von Trinkwasser-Installationen sind eine bewährte Maßnahme zum Erhalt der Trinkwassergüte. Die Beschaffenheit von Trinkwasser ändert sich in Trinkwasser-Installationen, z. B. durch Kontakt mit Werkstoffen, Erwärmung und/oder Stillstandzeiten. Längere Stillstandzeiten des Trinkwassers können zu gesundheitsgefährdender Bakterienvermehrung (Legionellenbildung) führen. Daher wird heutzutage zunehmend ein regelmäßiger Wasseraustausch auf Basis des bestimmungsgemäßen Betriebs der betreffenden Trinkwasser-Installation durch Anwendung automatischer Hygienespülungen gefordert.

Bekannt ist eine von der Firma Schell vermarktete Küchenarmatur GRANDIS E. Diese Küchenarmatur hat einen schwenkbaren Auslauf und bietet zwei Optionen zur Auslösung. Sie weist einen Einhebelmischer auf, mittels dem sich Volumenstrom und Wassertemperatur bei jeder Nutzung individuell einstellen lassen. Zudem weist diese Küchenarmatur zur berührungslosen Auslösung durch Nahreflex einen Infrarot-Sensor auf, der in Kombination mit einer zugehörigen Elektronik ein Magnetventil steuert. Das Magnetventil ist mit Einstellschrauben zur Einstellung des Mischverhältnisses von Warm- und Kaltwasser und damit der Wassertemperatur sowie zur Einstellung der Wassermenge versehen. In Kombination mit einem elektronischen Wassermanagementsystem ermöglicht das Magnetventil dieser Küchenarmatur regelmäßige Hygienespülungen, die auch als Stagnationsspülungen bezeichnet werden.

Diese bekannte Küchenarmatur weist jedoch aufgrund der beiden Auslösungsoptionen mehrere Wasserstrecken auf, die einen schlecht spülbaren Totraum definieren, was hinsichtlich des Erhalts einer hohen Trinkwassergüte nachteilig ist. Die Kombination einer manuell zu betätigenden Einhebelmischkartusche und eines zusätzlichen, über einen Infrarot-Sensor berührungslos auslösbaren Magnetventils verursacht einen Mehraufwand an Komponenten und Kosten.

Aus der AT 16 285 U1 ist eine endständige Sanitärarmatur mit einer Anordnung zum Spülen bekannt, die für ein Ausspülen von Stagnationswasser aus der Sanitärarmatur bzw. einer Trinkwasser-Installation ausgebildet ist. Die Sanitärarmatur umfasst einen an eine Leitung für zuströmendes Warmwasser und eine Leitung für zuströmendes Kaltwasser gekoppelten Armaturenkörper, mindestens zwei Abgänge, eine Betätigungseinrichtung nach Art eines Einhebelmischers und ein mit der Betätigungseinrichtung gekoppeltes erstes Ventil, mit dem bei Entnahme von Trinkwasser durch Schwenken der Betätigungseinrichtung die aus dem Mischverhältnis des Warmwassers und Kaltwassers resultierende Temperatur des Mischwassers und beim Kippen der Betätigungseinrichtung der Volumenstrom des Mischwassers eingestellt wird. Das erste Ventil ist als Baugruppe aus einem Regelventil und einem daran über eine Leitung für Mischwasser gekoppelten Absperrventil ausgeführt und mit einem ersten der Abgänge gekoppelt. Des Weiteren umfasst die Sanitärarmatur ein zweites Ventil, das mit dem ersten Abgang gekoppelt und zur Spülung der Leitung für zuströmendes Kaltwasser ausgebildet ist, und mindestens ein weiteres mit dem zweiten oder weiteren Abgang korrespondierendes Ventil, das mit der Leitung für Mischwasser gekoppelt ist.

Die aus der AT 16 285 U1 bekannte Sanitärarmatur weist aufgrund der Mehrzahl von Abgängen und Ventilen mehrere Wasserstrecken auf, die einen schlecht spülbaren Totraum darstellen, so dass es bei dieser bekannten Sanitärarmatur durchaus noch zu Stagnation und Legionellenbildung kommen kann.

Bei rein elektronischen Armaturen mit Magnetventil und Infrarot-Sensor zur berührungslosen Auslösung des Magnetventils kann die Hygienespülung zwar durch eine entsprechende Ansteuerung mittels eines elektronischen Trinkwassermanagementsystems durchgeführt werden, jedoch kann durch die mechanisch einstellbare Mischerwelle oder Mischerkartusche keine selektive Hygienespülung von Kaltwasser oder Warmwasser erfolgen. Es wird abhängig von der Einstellung der Mischerwelle bzw. Mischkartusche in der Regel Mischwasser ausgespült. Hierbei kann jedoch mitunter nicht sichergestellt werden, ob ausreichend Wasser ausgespült wurde. Beispielsweise kann gegebenenfalls kein oder nicht ausreichend Kaltwasser ausgespült werden, wenn die Mischerwelle in einer Stellung steht, die ausschließlich oder im Wesentlichen einen Warmwasserfluss ermöglicht. Zudem ist es kaum nachhaltig, wenn in Situationen, in denen zum Erhalt der Trinkwassergüte lediglich Kaltwasser ausgespült werden muss, Warmwasser ausgespült wird.

Der vorliegenden Erfindung liegt die Aufgabe zugrunde, eine Sanitärarmatur der eingangs genannten Art zu schaffen, die eine intuitive manuelle Bedienung zur Einstellung von Wassertemperatur und Volumenstrom bietet und zudem eine verbesserte Hygienespülung ermöglicht.

Diese Aufgabe wird durch eine Sanitärarmatur mit den im Anspruch 1 angegebenen Merkmalen gelöst.

Die erfindungsgemäße Sanitärarmatur umfasst einen Armaturenkörper, einen Wasseranschluss, einen Wasserauslauf oder Wasserausgang und ein einen Hebel aufweisendes bewegliches Bedienelement. Der Hebel ist zum Steuern einer Wassertemperatur um eine erste Drehachse drehbar und zum Steuern eines Wasserflusses (Wasservolumenstromes) um eine zweite Drehachse kippbar. Erfindungsgemäß ist in dem Armaturenkörper eine Sensorvorrichtung zur Erfassung verschiedener Positionen des Hebels des beweglichen Bedienelements relativ zu einer festgelegten Position des Armaturenkörpers angeordnet.

Die erfindungsgemäße Sanitärarmatur bietet dem Nutzer den manuellen Bedienkomfort eines Einhebelmischers. Sie bietet somit eine einfache intuitive Einstellbarkeit von Volumenstrom und Wassertemperatur. Darüber hinaus bietet die erfindungsgemäße Sanitärarmatur die Möglichkeit, eine verbesserte Hygienespülung zu realisieren. Hierzu ist in dem Armaturenkörper eine absperrorganfreie, insbesondere ventilfreie Wasserstrecke ausgebildet, die den Wasseranschluss mit dem Wasserauslauf oder Wasserausgang verbindet. Die Wasserstrecke entspricht einem Abschnitt einer Wasserleitung, die mit dem Wasserauslauf endet oder an dem Wasserausgang durch einen weiteren Leitungsabschnitt, beispielsweise in Form eines Rohrstücks und/oder eines Anschlussbogens, verlängert werden kann. Die absperrorganfreie Wasserstrecke der erfindungsgemäßen Sanitärarmatur dient der Trinkwassernutzung, indem sie bei einer Trinkwasserentnahme hinsichtlich Volumenstrom und Wassertemperatur eingestelltes Trinkwasser für Nutzungszwecke führt bzw. weiterleitet. Des Weiteren kann die Wasserstrecke vorteilhaft für bedarfsgerechte Hygienespülungen einer mit ihr verbundenen, in Wasserfließrichtung vorgeordneten Trinkwasserleitung genutzt werden. Die Wasserstrecke ist vorzugsweise als totraumfreie oder im Wesentlichen totraumfreie Wasserstrecke ausgebildet.

Der Hebel der erfindungsgemäßen Sanitärarmatur, der zum Steuern einer Wassertemperatur um eine erste Drehachse drehbar und zum Steuern eines Wasserflusses (Wasservolumenstromes) um eine zweite Drehachse kippbar ist, kann selbst als Betätigungsgriff ausgeführt sein, d.h. der Hebel kann in einem solchen Fall unmittelbar manuell berührt und betätigt werden. Vorzugsweise ist dieser Hebel aber mit einem separat gefertigten Betätigungsgriff versehen, der mit dem Hebel verbunden, vorzugsweise lösbar verbunden ist. Hierzu kann der Hebel beispielsweise an seinem dem Armaturenkörper abgewandten Ende einen Verbindungsabschnitt aufweisen, welcher der formschlüssigen und/oder kraftschlüssigen Anbindung eines komplementären Betätigungsgriffs an den Verbindungsabschnitt dient.

Der Betätigungsgriff kann mit einem seitlich abstehenden Griffhebel versehen sein, wie dies bei klassischen Einhebelmischern der Fall ist. Ein solcher Griffhebel ist bevorzugt bei der erfindungsgemäßen Sanitärarmatur vorgesehen. Es liegt allerdings auch im Rahmen der Erfindung, den Betätigungsgriff ohne einen Griffhebel ausführen. Beispielsweise kann der Betätigungsgriff auch als Drehgriff ausgeführt werden. Der als Drehgriff ausgeführte Betätigungsgriff kann dabei eine klassische oder außergewöhnliche Griffform aufweisen. Zum Beispiel kann der als Drehgriff ausgeführte Betätigungsgriff eine zylindrische, kugelförmige, kubische, mehrkantige, dreieckige, polygonale, kreuzförmige, sternförmige oder organische Griffform bzw. Außenkontur aufweisen.

Der Erfindung liegt die Idee zugrunde, ein Bedienelement zur Steuerung einer elektronischen Mischeinheit, mittels der sich Volumenstrom und Temperatur von abzugebendem Trinkwasser einstellen lassen, in Form oder nach Art eines sogenannten Einhebelmischers zur Verfügung zu stellen. Mit der erfindungsgemäßen Sanitärarmatur lassen sich die Vorteile der elektronischen Mischeinheit und die einfache Bedienung eines Einhebelmischers kombinieren.

Die erfindungsgemäße Sanitärarmatur kann insbesondere als endständige Sanitärarmatur mit einem Wasserauslauf ausgeführt werden, beispielsweise als Waschtisch- oder Küchenarmatur. Alternativ kann die erfindungsgemäße Sanitärarmatur auch in Form eines sogenannten Unterputz-Einhebelmischers ausgeführt werden, wobei in diesem Fall ein Abschnitt des Armaturenkörpers für eine UnterputzAnordnung bestimmt und ausgebildet ist, bei welcher der Wasseranschluss und der Wasserausgang der fertig montierten Sanitärarmatur verdeckt in einer Wand oder einem verkleideten Hohlraum liegen, während der Hebel des beweglichen Bedienelements an einer Oberfläche, beispielsweise einer Duschwand, Badezimmerwand oder Ablageplatte zugänglich ist. An dem Wasserausgang ist dabei ein Leitungsabschnitt angeschlossen, beispielsweise ein Anschlussbogen, der an der Oberfläche zugänglich ist und beispielsweise für den Anschluss eines Handbrauseschlauches, einer Kopfbrause, eines Wannen- oder Waschtischwasserauslaufs oder eines beliebigen anderen Wasserauslaufs bestimmt ist.

Eine vorteilhafte Ausgestaltung der erfindungsgemäßen Sanitärarmatur ist dadurch gekennzeichnet, dass deren Sensorvorrichtung einen Hallsensor aufweist. Mittels eines Hallsensors lassen sich verschiedene Positionen des Hebels des beweglichen Bedienelements relativ zu einer festgelegten Position des Armaturenkörpers zuverlässig erfassen bzw. bestimmen. Ein Hallsensor ermöglicht eine reproduzierbare Erfassung und/oder Bestimmung verschiedener Positionen des Hebels eines Einhebelmischers relativ zu einer festgelegten Position des Armaturenkörpers. Mit dem Hallsensor lassen sich Magnetstärke und auch ein Winkel eintreffender Magnetfeldlinien messen. Der Hallsensor zeichnet sich dabei durch kompakte Abmessungen aus, so dass er sich ohne Schwierigkeiten allein oder in Verbindung mit einer elektronischen Platine in dem Armaturenkörper der Sanitärarmatur einbauen lässt. Die Platine ist dabei mit einer elektronischen Steuereinheit versehen.

Eine weitere vorteilhafte Ausgestaltung der Erfindung sieht vor, dass das Bedienelement einen um die erste Drehachse drehbaren Drehkörper aufweist, der in einem im Armaturenkörper festlegbaren bzw. festgelegten Lagerkörper gelagert ist. Hierdurch kann auf einfache und zuverlässige Weise die intuitive Bedienbarkeit eines Einhebelmischers realisiert werden.

Nach einer weiteren Ausgestaltung weist der Drehkörper miteinander fluchtende Bohrungen auf, in denen ein Achskörper zur Kipplagerung des Hebels gelagert ist. Durch diese Ausgestaltung lässt sich eine definierte Kippbewegung sicherstellen. Die Bohrungen und der darin gelagerte Achskörper definieren vorzugsweise die zweite Drehachse, um die der Hebel zum Steuern eines Wasserflusses kippbar bzw. schwenkbar ist.

Eine weitere Ausgestaltung der erfindungsgemäßen Sanitärarmatur sieht vor, dass der Drehkörper Anschläge aufweist, die eine Kippbewegung des Hebels begrenzen. Diese Anschläge sind beispielsweise so ausgeführt, dass sich der Hebel aus einer Ausgangsposition oder Schließstellung um bis zu ca. 45°, vorzugsweise um bis zu ca. 30° kippen oder schwenken lässt. Es sind allerdings auch andere Kippwinkel (Schwenkwinkel) möglich.

Eine weitere Ausgestaltung der erfindungsgemäßen Sanitärarmatur sieht vor, dass der Lagerkörper eine Drehung des Drehkörpers begrenzende Anschläge aufweist. Diese Anschläge sind so ausgeführt, dass der Hebel beispielsweise um ca. 90° gedreht werden kann. Das eine Ende des durch die Anschläge begrenzten Drehbereichs entspricht dabei einer Temperatureinstellung, bei der mittels einer der Sanitärarmatur vorgeordneten, elektronisch steuerbaren Mischeinheit, die ein Ventil zur Einstellung des Volumenstroms von über eine Mischwasserleitung abzugebendem Mischwasser aufweist, ausschließlich Kaltwasser über die Mischwasserleitung abgegeben wird, wenn das Ventil zur Einstellung des Volumenstroms geöffnet ist. Das andere Ende des durch die Anschläge begrenzten Drehbereichs entspricht dagegen einer Temperatureinstellung, bei der mittels der elektronisch steuerbaren Mischeinheit ausschließlich Warmwasser über die Mischwasserleitung abgegeben wird, wenn das Ventil zur Einstellung des Volumenstroms geöffnet ist. Durch Drehen des Drehkörpers auf verschiedene zwischen den beiden Anschlägen liegende Drehpositionen lassen sich unterschiedliche Mischwassertemperaturen einstellen.

Nach einer weiteren Ausgestaltung der erfindungsgemäßen Sanitärarmatur weist der Armaturenkörper innenseitig eine Abtrennung in Form eines Bodens oder einer Wand auf, wobei der Lagerkörper unter Zwischenanordnung eines Abdichtungskörpers an der Abtrennung axial festgelegt ist. Durch diese Ausgestaltung lässt sich ein innerer Nassbereich des Armaturenkörpers in konstruktiv einfacher und zuverlässiger Weise von einem Trockenbereich zur Aufnahme der Sensorvorrichtung wasserdicht abschotten. Die axiale Festlegung des Abdichtungskörpers an der Abtrennung kann dabei beispielsweise mittels einer Schraubverbindung ausgeführt sein. Der Abdichtungskörper ist vorzugsweise aus Kunststoff hergestellt und/oder mit einem Dichtring aus Elastomer, beispielsweise einem O-Ring, versehen.

Des Weiteren sieht eine vorteilhafte Ausgestaltung der Erfindung vor, dass ein Elektro- und/oder Signalkabel durch den Abdichtungskörper hindurch zu der Sensorvorrichtung hin wasserdicht geführt ist. Insbesondere liegt es im Rahmen der Erfindung, dass in der oben genannten Abtrennung, die in Form eines Bodens oder einer Wand im Inneren des hohlen Armaturenkörpers ausgebildet ist, eine Durchgangsöffnung vorgesehen ist. In die Durchgangsöffnung ist vorzugsweise eine Kabeldurchführung eingesetzt. Die Durchgangsöffnung ist vorzugsweise als Bohrung ausgebildet und kann ein Innengewinde aufweisen. Die Kabeldurchführung weist beispielsweise zwei miteinander verschraubte Hülsenteile und einen Dichtring auf, wobei der Dichtring beim Verschrauben der Hülsenteile miteinander radial dichtend gegen das durch die Hülsenteile geführte Kabel gepresst wird. Eines der Hülsenteile hat vorzugsweise ein Außengewinde, das in das Innengewinde der Durchgangsöffnung eingeschraubt ist.

Nach einer weiteren Ausgestaltung sind in der oben genannten Abtrennung, die in Form eines Bodens oder einer Wand im Inneren des hohlen Armaturenkörpers ausgebildet ist, ein oder mehrere Sacklöcher zur Aufnahme einer entsprechenden Anzahl von Positionierstiften vorgesehen, wobei der oder die Positionierstifte fest mit dem Abdichtungskörper verbunden sind, beispielsweise einstückig mit diesem ausgebildet sind.

Eine weitere vorteilhafte Ausgestaltung der erfindungsgemäßen Sanitärarmatur ist dadurch gekennzeichnet, dass in dem Drehkörper des Bedienelements ein Magnet verschiebbar geführt ist, wobei der Magnet durch eine Kipp- oder Schwenkbewegung des Hebels verschiebbar ist. Der Magnet ist der Sensorvorrichtung, mittels der die jeweilige Position des Hebels des Bedienelements relativ zu der festgelegten Position des Armaturenkörpers erfasst wird, zugeordnet, wobei die Sensorvorrichtung vorzugsweise einen Hallsensor aufweist.

Der Magnet wird beispielsweise durch den Achskörper, der aus magnetischem Metall hergestellt ist, angezogen und somit unterhalb des Hebels hochgehalten bzw. seitlich an dem Hebel gehalten. Dadurch kann der Magnet stets an einer vorgegebenen Bahn in linearer Richtung der Z-Achse bzw. einer Längsmittelachse des Hebels gehalten werden. Durch ein Kippen bzw. Schwenken des Hebels wird über die vorgegebene Bahn auch der Magnet bewegt, was beispielsweise mittels eines Hallsensors erfasst und in einer Elektronik ausgewertet werden kann. Eine in dem Drehkörper ausgebildete Führung, die beispielsweise durch zwei Führungsschlitze definiert ist, kann den Magneten auf der Z-Achse bzw. einer Längsmittelachse des Hebels gegen Rotation in Position halten. Der Hebel weist an seiner dem Magneten zugewandten Seite beispielsweise ein muldenförmiges Profil auf. Der Magnet kann dabei vorzugsweise in Form eines quaderförmigen Stabmagneten ausgeführt sein.

Nach einer weiteren Ausgestaltung ist der der Drehlagerung des Drehkörpers dienende Lagerkörper mittels einer Hohlschraube, die in ein Innengewinde des Armaturenkörpers einschraubbar ist, in dem Armaturenkörper axial festlegbar bzw. festgelegt. Diese Art der Verbindung des Lagerkörpers mit dem Armaturenkörper lässt sich fertigungstechnisch kostengünstig realisieren und ermöglicht eine zuverlässige wasserdichte Abschottung des besagten Trockenbereichs, im welchem die Sensorvorrichtung aufgenommen ist, von dem inneren Nassbereich des Armaturenkörpers. Insbesondere ermöglicht diese Art der Verbindung des Lagerkörpers mit dem Armaturenkörper eine eventuell erforderliche Demontage des Lagerkörpers für Wartungs- oder Reparaturzwecke.

Zur Erzielung einer Haptik, die der Haptik eines klassischen Einhebelmischers oder Betätigungsgriffs eines Wasserventils (Wasserhahns) entspricht, sieht eine weitere Ausgestaltung der erfindungsgemäßen Sanitärarmatur vor, dass der Drehkörper und/oder der Hebel des Bedienelements mit einem Reibelement, beispielsweise in Form eines Kugeldruckstücks oder federbelasteten Reibelements oder einklemmbaren Rings, vorzugsweise O-Rings, oder eines eingepressten, vorspringenden Elements aus Elastomer versehen sind/ist. Je mehr das Reibelement eingeklemmt bzw. eingepresst wird, desto stärker ist die Reibung zwischen dem Drehkörper und dem Lagerkörper bzw. zwischen dem Hebel und dem Drehkörper. Dementsprechend muss dann eine größere Betätigungskraft zum Drehen des Drehkörpers bzw. zum Kippen oder Schwenken des Hebels angewandt werden. Die Reibung kann bei der erfindungsgemäßen Sanitärarmatur so vorgegeben bzw. eingestellt werden, dass die aufzubringende Betätigungskraft beispielsweise in etwa der Betätigungskraft entspricht, die üblicherweise zur Betätigung eines klassischen Einhebelmischers aufzubringen ist.

Eine weitere vorteilhafte Ausgestaltung der erfindungsgemäßen Sanitärarmatur sieht vor, dass die Hohlschraube transparent ausgebildet ist. Hierdurch lässt sich Licht, insbesondere Licht unterschiedlicher Lichtfarbe, das zum Beispiel von einer der Sensorvorrichtung zugeordneten Leuchtdiode emittiert wird, an der Außenseite der Sanitärarmatur wahrnehmen bzw. zur Außenseite der Sanitärarmatur hin weiterleiten. Mittels unterschiedlicher Lichtfarben lässt sich die eingestellte Temperatur von über die Sanitärarmatur abzugebendem Trinkwasser qualitativ anzeigen, indem zum Beispiel bei einer Temperatureinstellung, bei welcher heißes Trinkwasser abgegeben werden würde bzw. wird, rotes Licht emittiert wird. Hierzu ist nach einer weiteren vorteilhaften Ausgestaltung vorgesehen, dass die Hohlschraube außenseitig mit einem ringförmigen Lichtleiter umgeben ist.

Eine weitere vorteilhafte Ausgestaltung der erfindungsgemäßen Sanitärarmatur ist dadurch gekennzeichnet, dass die Hohlschraube an ihrem äußeren Ende einen umlaufenden, radial einwärts vorstehenden Steg aufweist. Durch eine entsprechend ausgebildete Hohlschraube lässt sich sowohl der Lagerkörper als auch der Drehkörper des Bedienelements in dem Armaturenkörper auf einfache Weise in axialer Richtung zuverlässig sichern.

Nach einer weiteren vorteilhaften Ausgestaltung der Erfindung ist der Lagerkörper zumindest in einem der Hohlschraube zugewandten Körperabschnitt transparent ausgebildet, wobei dieser Körperabschnitt des Lagerkörpers innenseitig vorzugsweise mit einem ringförmigen Lichtleiter versehen ist. Der Lichtleiter ist dabei vorzugsweise so ausgebildet, dass er eine Umlenkfläche, beispielsweise eine konische Umlenkfläche für weiterzuleitende Lichtstrahlen definiert. Hierdurch kann bei zuverlässiger mechanischer Verbindung von Lagerkörper, Drehkörper und Armaturenkörper ausgehend von einem nahe der Sensorvorrichtung angeordneten Leuchtmittel, z. B. einer Leuchtdiode, eine effiziente Auskopplung des von dem Leuchtmittel emittierten Lichts aus dem Armaturenkörper heraus zu der Außenseite der Sanitärarmatur hin erreicht werden.

Die oben dargelegte Aufgabe, welche der vorliegenden Erfindung zugrunde liegt, wird insbesondere durch ein Sanitärarmaturensystem mit den in Anspruch 15 angegebenen Merkmalen gelöst. Das Sanitärarmaturensystem umfasst eine erfindungsgemäße Sanitärarmatur, vorzugsweise eine solche Sanitärarmatur nach mindestens einer der oben genannten Ausgestaltungen, und eine der Sanitärarmatur zugeordnete, mittels des Bedienelements elektronisch steuerbare Mischeinheit, wobei die Mischeinheit einen Anschluss für Kaltwasser, einen Anschluss für Warmwasser, einen Anschluss für eine mit der Sanitärarmatur verbindbare Mischwasserleitung, mindestens zwei unabhängig voneinander steuerbare Ventile zur Einstellung von Temperatur und Volumenstrom des über den Anschluss für die Mischwasserleitung abzugebenden Mischwassers und die Ventile steuernde Antriebe aufweist.

Die Ventile der Mischeinheit sind vorzugsweise als einzeln verschließbare Keramikkartuschen ausgeführt. Die Mischeinheit lässt sich dadurch mit sehr kompakten Abmessungen verwirklichen. Bei den Antrieben zur Steuerung der Ventile handelt es sich vorzugsweise um unabhängig voneinander ansteuerbare Elektromotoren.

Die Mischeinheit kann in ein Trinkwasser-Management-System, welches eine vernetzte Elektronik aufweist, eingebunden werden. Die vernetzte Elektronik kann dabei skalierbar an die spezifischen Anforderungen jeder Trinkwasseranlage angepasst werden. Mittels einer Vielzahl von Sensoren, z. B. Wassertemperatursensoren und/oder Durchflusssensoren, erfassen zugeordnete Controller in dem Trinkwasser-Management-System die Betriebszustände der Trinkwasseranlage sowie die für den Erhalt der Trinkwassergüte entscheidenden Parameter. Dazu zählen beispielsweise das Temperaturniveau im warmen Trinkwasser (Warmwasser) und kalten Trinkwasser (Kaltwasser) sowie eventuelle Nutzungsunterbrechungen. Bei Überschreiten- oder Unterschreiten definierter Soll-Werte wird dann mittels des Trinkwasser-Management-Systems automatisch eine bedarfsgerechte Hygienespülung ausgelöst.

Nachfolgend wird die Erfindung anhand einer Ausführungsbeispiele darstellenden Zeichnung näher erläutert. Es zeigen mehr oder weniger schematisch:
- Fig. 1: eine erfindungsgemäße Sanitärarmatur, die ein Bedienelement mit einem kipp- und drehbaren Hebel aufweist, in einer perspektivischen Darstellung in Verbindung mit einer elektronischen Mischeinheit in geschnittener Vorderansicht;
- Fig. 2: die erfindungsgemäße Sanitärarmatur aus Fig. 1 in einer vertikalen Schnittansicht, wobei sich der Hebel des Bedienelements zur Abgabe von Trinkwasser in einer gekippten Stellung befindet;
- Fig. 3: einen oberen Abschnitt der Sanitärarmatur aus Fig. 2 wiederum in vertikaler Schnittansicht, wobei sich der Hebel des Bedienelements in einer vertikalen Ausgangsstellung befindet, bei welcher eine Trinkwasserabgabe gesperrt ist;
- Fig. 4: die Sanitärarmatur in einer horizontalen Schnittansicht entlang der Schnittlinie IV-IV in Fig. 3;
- Fig. 5: einen oberen Abschnitt der Sanitärarmatur aus Fig. 1, jedoch ohne seitlichen Wasserauslauf und ohne Betätigungsgriff, in perspektivischer Dreiviertel-Vertikalschnitt-Darstellung;
- Fig. 6: den kipp- und drehbaren Hebel mit zugeordneter Sensorvorrichtung in perspektivischer Darstellung;
- Fig. 7: einen oberen Abschnitt der Sanitärarmatur ähnlich der Fig. 3 in vertikaler Schnittansicht, jedoch in größerem Maßstab, ohne Betätigungsgriff und ohne seitlichen Wasserauslauf;
- Fig. 8a und 8b: einen oberen Abschnitt der Sanitärarmatur ähnlich der Fig. 7 in perspektivischer Dreiviertel-Vertikalschnitt-Darstellung, wobei sich der Hebel des Bedienelements in Fig. 8a in einer gekippten Stellung befindet, wohingegen sich der Hebel in Fig. 8b in vertikaler Ausgangsstellung (Schließstellung) befindet; und
- Fig. 9a und 9b: den Hebel des Bedienelements der Sanitärarmatur mit zugeordnetem Lagerkörper in zwei unterschiedlichen perspektivischen Darstellungen, wobei sich der Hebel sowohl in Fig. 9a als auch in Fig. 9b in einer gekippten Stellung befindet.

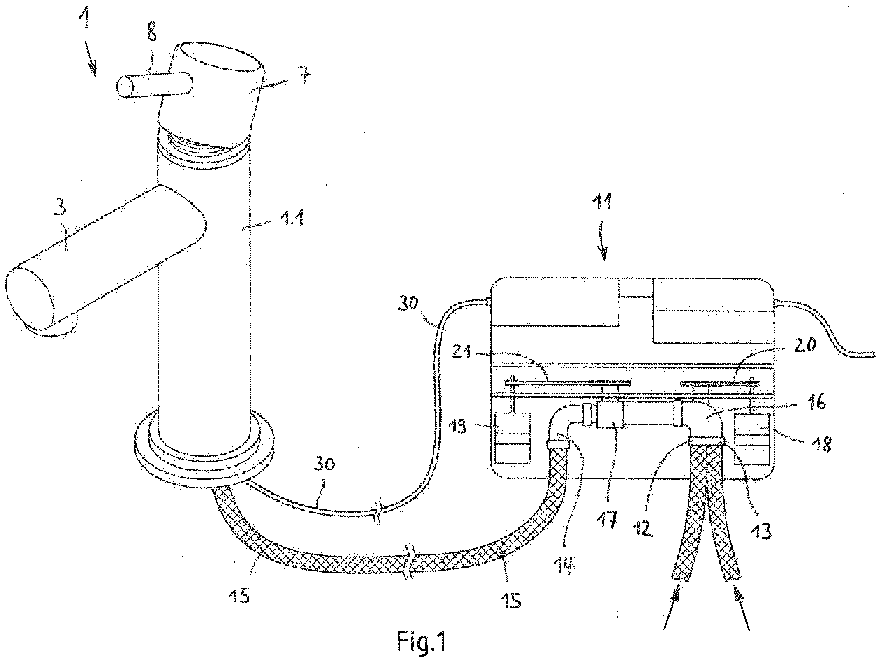

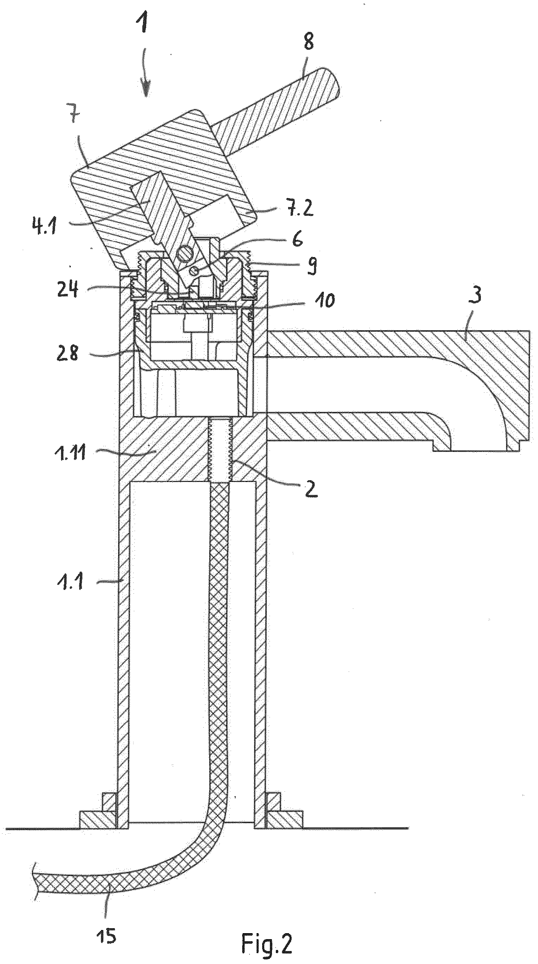

Die in der Zeichnung, insbesondere in den Fig. 1 und 2 dargestellte erfindungsgemäße Sanitärarmatur 1 ähnelt in ihrem Aussehen bzw. ihrer Form sowie in ihrer Bedienbarkeit einem sogenannten Einhebelmischer, wie er insbesondere als endständige Waschtischarmatur oder Küchenarmatur bekannt ist.

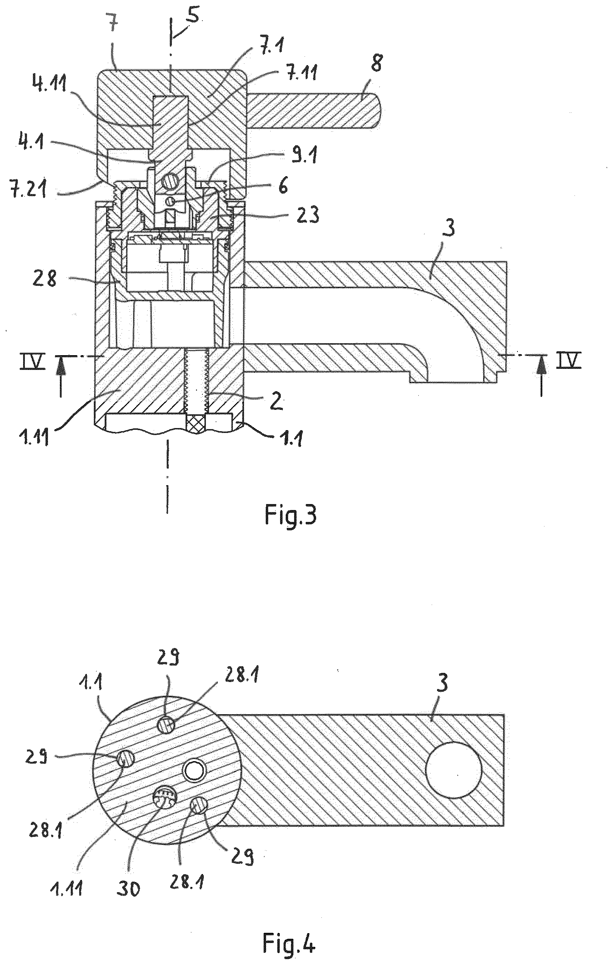

Die Sanitärarmatur 1 hat einen Armaturenkörper 1.1 mit einem Wasseranschluss 2, einem Wasserauslauf 3 und einem einen Hebel 4.1 aufweisenden beweglichen Bedienelement 4. Der Hebel 4.1 ist zum Steuern der Temperatur von abzugebendem Trinkwasser um eine erste Drehachse 5, beispielsweise eine vertikale Drehachse 5 drehbar und zum Steuern des Wasserflusses, d. h. des abzugebenden Wasservolumenstroms, um eine zweite Drehachse 6 oder quer zur ersten Drehachse 5 verlaufende Drehachse 6 kippbar (vgl. Fig. 3).

Der Hebel 4.1 hat an seinem dem Armaturenkörper 1.1 abgewandten Ende einen Verbindungsabschnitt 4.11. Der Verbindungsabschnitt 4.11 dient der formschlüssigen sowie kraftschlüssigen Anbindung eines komplementären Betätigungsgriffs 7. Der Verbindungsabschnitt 4.11 ist hierzu beispielsweise in Form eines Vierkantzapfens ausgeführt. Der Betätigungsgriff 7 weist einen Verbindungsabschnitt 7.1 auf, in welchem ein Loch 7.11 zur formschlüssigen Aufnahme des Verbindungsabschnitts 4.11 des Hebels 4.1 ausgebildet ist. Der Verbindungsabschnitt 7.1 des Betätigungsgriffs 7 ist beispielsweise mit einem seitlich abstehenden Griffhebel 8 versehen und weist vorzugsweise eine seitliche Gewindebohrung (nicht gezeigt) auf, in die eine gegen den Verbindungsabschnitt 4.11 des Hebels 4.1 gepresste Madenschraube (nicht gezeigt) eingeschraubt ist. Der Verbindungsabschnitt 7.1 des Betätigungsgriffs 7 weist vorzugsweise einen dem Armaturenkörper 1.1 zugewandten Kragen 7.2 auf, der ein oberes oder gegebenenfalls seitliches Ende des Armaturenkörpers 1.1 bzw. eine nachfolgend noch weiter beschriebene Hohlschraube 9 umgreift, die in ein Innengewinde des Armaturenkörpers 1.1 eingeschraubt ist. Der Kragen 7.2 weist auf einer seiner Seiten, die im Wesentlichen parallel zu einem der Kipplagerung des Hebels 4.1 dienenden Stift oder Achskörper 25 ausgebildet ist, eine Abschrägung 7.21 auf, die eine bestimmte Kippbewegung des Betätigungsgriffs 7 mit dem daran angebundenen Hebel 4.1 zulässt, beispielsweise eine Kippbewegung um maximal ca. 30° (vgl. Fig. 1 bis 3).

Sofern der Betätigungsgriff 7, wie in den Figuren 1 bis 3 gezeigt, mit einem seitlich abstehenden Griffhebel 8 versehen ist, ist die Abschrägung 7.21 vorzugsweise auf der dem Griffhebel 8 abgewandten Seite des Betätigungsgriffs 7 ausgebildet. Ein solcher Griffhebel 8 ist bevorzugt bei der erfindungsgemäßen Sanitärarmatur vorgesehen. Wie oben bereits angemerkt, liegt es jedoch auch im Rahmen der Erfindung, den Betätigungsgriff 7 ohne einen Griffhebel 8 ausführen. Beispielsweise kann der Betätigungsgriff 7 als Drehgriff ausgeführt werden.

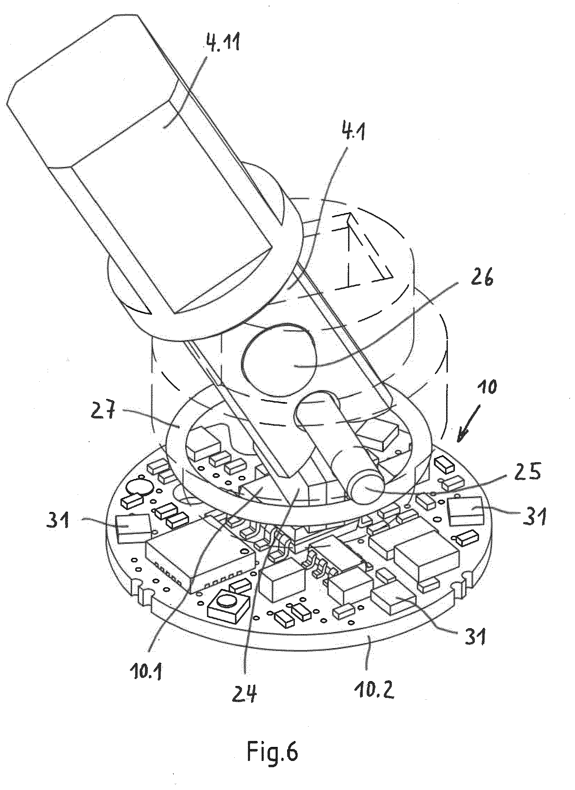

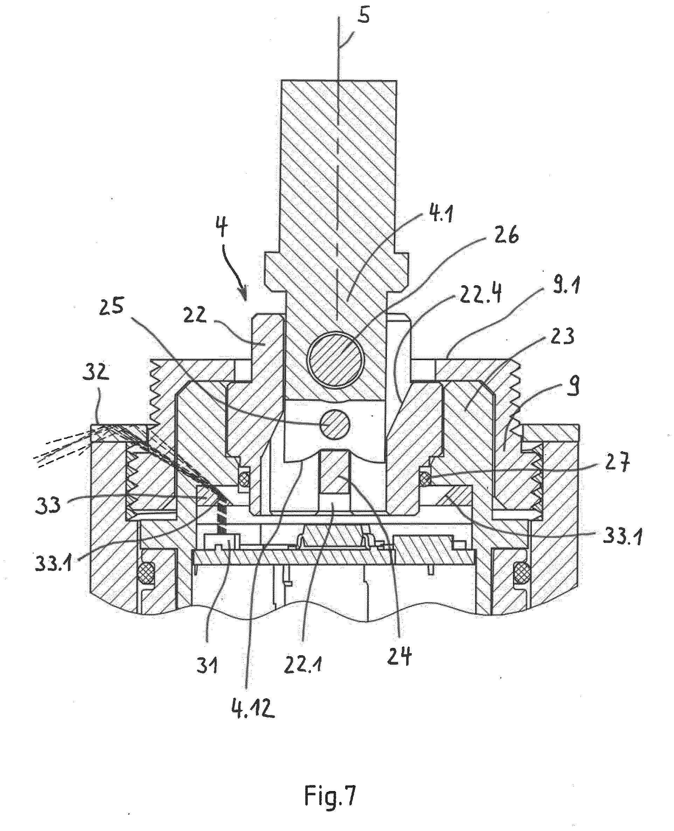

Im Unterschied zu einem herkömmlichen Einhebelmischer weist der Armaturenkörper 1.1 der insbesondere in Fig. 2 gezeigten Sanitärarmatur 1 kein mechanisches Ventil zum Steuern des Wasserflusses bzw. zum Steuern der Wassertemperatur auf. Stattdessen ist in dem Armaturenkörper 1.1 eine Sensorvorrichtung 10 zur Erfassung der jeweiligen Position des Hebels 4.1 relativ zu einer festgelegten Position des Armaturenkörpers 1.1 angeordnet (vgl. insbesondere Fig. 6 und 7).

Durch die Sensorvorrichtung 10 ist es möglich, mittels des Bedienelements 4 eine entfernt von der Sanitärarmatur 1 angeordnete elektronische Mischeinheit 11 zu steuern (vgl. Fig. 1). Diese elektronische Bedienbarkeit vermittelt dem Nutzer das Bedienerlebnis eines klassischen, rein mechanisch funktionierenden Einhebelmischers und somit die intuitive Bedienung zur Einstellung von Volumenstrom und Temperatur von zu zapfendem Trinkwasser.

Die Mischeinheit 11 umfasst einen Anschluss 12 für Kaltwasser, einen Anschluss 13 für Warmwasser, einen Anschluss 14 für eine mit der Sanitärarmatur 1 verbindbare Mischwasserleitung 15, mindestens zwei unabhängig voneinander steuerbare Ventile 16, 17 zur Einstellung von Temperatur bzw. Volumenstrom des über den Anschluss für die Mischwasserleitung 15 abzugebenden Mischwassers und die Ventile 16, 17 steuernde Antriebe 18, 19. Die Ventile 16, 17 sind vorzugsweise in Keramikkartuschen-Technologie ausgeführt. Das jeweilige kartuschenförmige Ventil 16, 17 weist eine oder mehrere, Durchgangslöcher aufweisende Keramikscheiben auf. Die Antriebe 18, 19 sind vorzugsweise durch Elektromotoren gebildet, die durch Getriebe 20, 21, beispielsweise Zahnrad- oder Zahnrad-Zahnriemen-Getriebe mit den beweglichen Ventilkörpern (nicht gezeigt), vorzugsweise Keramikscheiben der Ventile 16, 17 gekoppelt sind (vgl. Fig. 1). Die Mischeinheit 11 kann beispielsweise unterhalb eines Waschtisches oder einer Küchenspüle angeordnet sein.

Trotz der Bedienweise der erfindungsgemäßen Sanitärarmatur 1, die der Bedienweise eines klassischen Einhebelmischers entspricht, besteht bei der erfindungsgemäßen Sanitärarmatur 1 für den Nutzer oder den Betreiber eines Gebäudes mit entsprechender Sanitäreinrichtung die Möglichkeit zur automatisierten und/oder ferngesteuerten Ausspülung (Hygienespülung) der durch die Sanitärarmatur 1 definierten Wasserstrecke, um eine kritische Trinkwasserstagnation und somit die Gefahr einer Legionellenbildung zu verhindern. Hierzu wird die Mischeinheit 11 vorzugsweise in ein (hier nicht näher gezeigtes) Trinkwasser-Management-System der oben genannten Art einbezogen.

Die erfindungsgemäße Konstruktion bzw. Ausführung der Sanitärarmatur 1 ergibt eine totraumfreie oder zumindest im Wesentlichen totraumfreie Wasserstrecke für ein Zapfen von Trinkwasser sowie für eine bedarfsgerechte Hygienespülung einer die Sanitärarmatur 1 versorgenden Trinkwasserleitung.

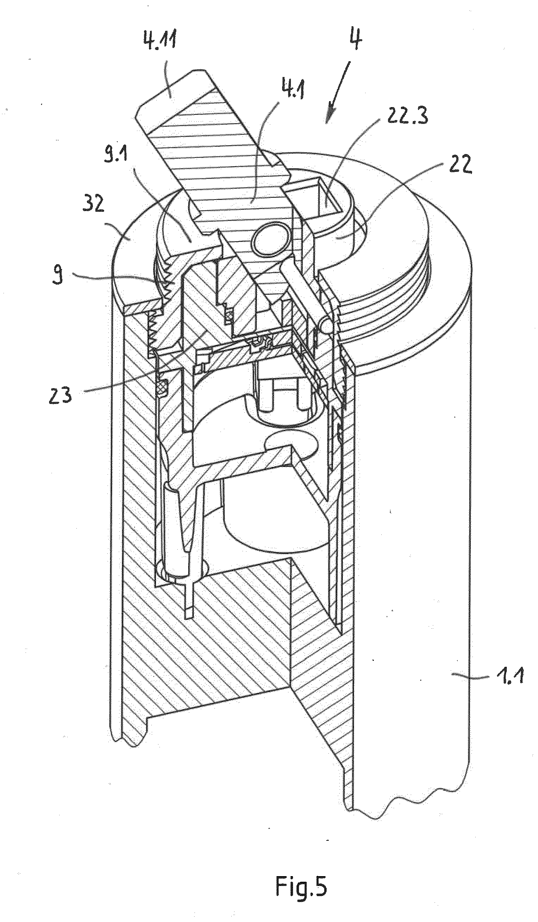

Um die jeweilige Position des Hebels 4.1 des Bedienelements 4 genau zu erfassen, weist die in dem Armaturenkörper 1.1 angeordnete Sensorvorrichtung 10 vorzugsweise einen Hallsensor 10.1 auf. Das Bedienelement 4 weist dabei einen um die erste oder vertikale Drehachse 5 drehbaren Drehkörper 22 auf, der in einem in dem Armaturenkörper 1.1 festlegbaren bzw. festgelegten Lagerkörper 23 gelagert ist (vgl. Fig. 2, 3 und 5 bis 8b). Dem Hallsensor 10.1 ist ein Magnet 24 zugeordnet. Der Magnet 24 ist im Drehkörper 22 verschiebbar geführt, wobei der Magnet 24 durch eine Kippbewegung des Hebels 4.1 verschiebbar ist (vgl. Fig. 2, 3 und 5 bis 8b). Der Hebel 4.1 weist an seiner dem Magneten 24 zugewandten Seite ein muldenförmiges Profil 4.12 auf. Der Magnet 24 ist vorzugsweise in Form eines quaderförmigen Stabmagneten ausgeführt. Zwei Führungsschlitze 22.1 im Drehkörper 22 halten den Magneten 24 auf einer vertikalen Achse bzw. einer parallel zu der ersten Drehachse 5 verlaufenden Achse gegen Rotation in Position. Der Hallsensor 10.1 ist auf einer elektronischen Platine 10.2 angebracht, die geschützt in dem Armaturenkörper 1.1 unterhalb bzw. beanstandet zu dem Drehkörper 22 angeordnet ist (Fig. 6 und 7).

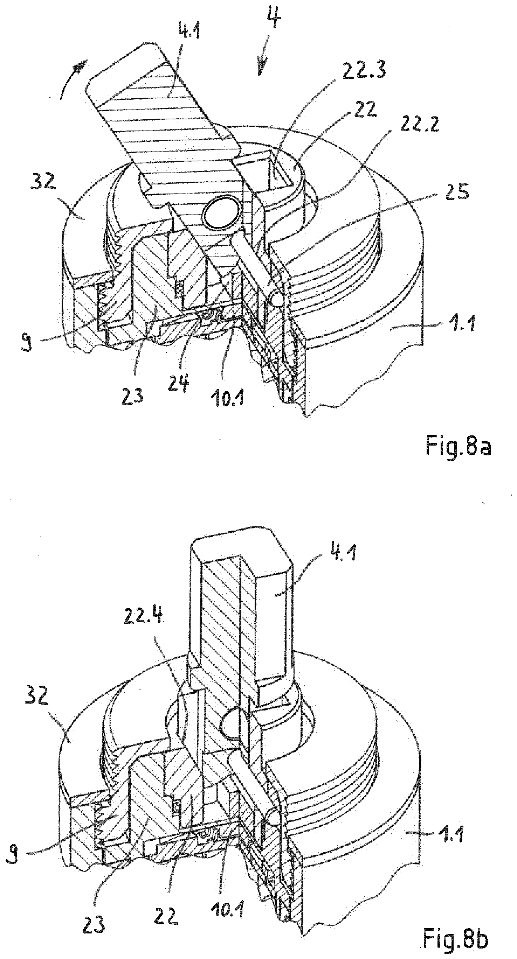

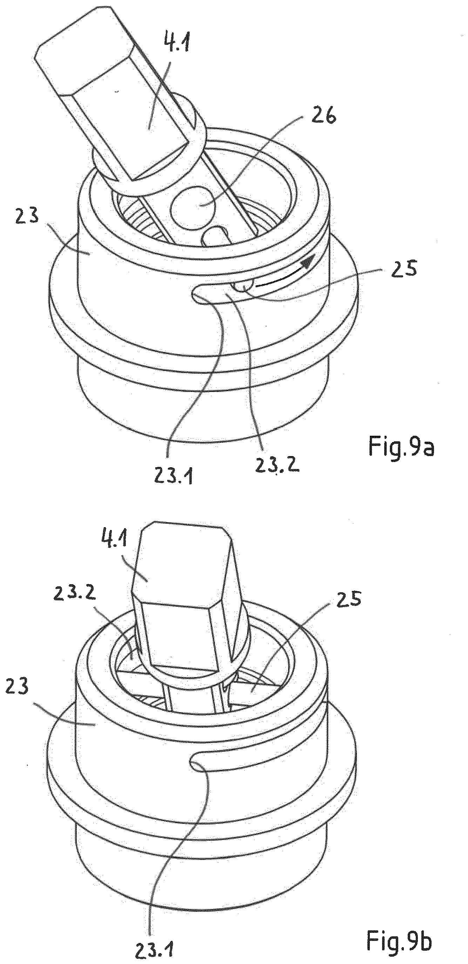

Des Weiteren weist der Drehkörper 22 miteinander fluchtende Bohrungen 22.2 auf, in denen der Stift oder Achskörper 25 zur Kipplagerung des Hebels 4.1 gelagert ist. In dem Drehkörper 22 sind Anschläge 22.3, 22.4 ausgebildet, die eine Kippbewegung des Hebels 4.1 begrenzen (Fig. 8a und 8b). Zudem weist der Lagerkörper 23 Anschläge 23.1 auf, welche eine Drehung des Drehkörpers 22 begrenzen (Fig. 9a und 9b). Die Anschläge 23.1 sich durch in dem Lagerkörper 23 ausgebildete, einander gegenüberliegende Teilumfangsschlitze 23.2 definiert. Die Enden des den Hebel 4.1 durchdringenden Stiftes oder Achskörpers 25 greifen mit Spiel in die Teilumfangsschlitze 23.2.

Ferner sind der Drehkörper 22 und der Hebel 4.1 des Bedienelements 4 mit Reibelementen 26, 27 versehen. Die Reibelemente 26, 27 verbessern den haptischen Eindruck, den ein Nutzer der Sanitärarmatur 1 bei deren manueller Bedienung wahrnimmt. Die Reibelemente 26, 27 bzw. deren Reibung wird beispielsweise so bemessen, dass die Haptik beim manuellen Bedienen der erfindungsgemäßen Sanitärarmatur 1 der Haptik beim Bedienen eines klassischen Einhebelmischers gleicht oder letztere sogar übertrifft. Dem Drehkörper 22 ist beispielsweise ein einklemmbarer oder verpressbarer O-Ring (Elastomerring) als Reibelement 27 zugeordnet, während der Hebel 4.1 beispielsweise eine Bohrung aufweist, in die daraus vorspringende Zylinder oder Kugeln als Reibelemente 26 eingesetzt sind. Die Zylinder oder Kugeln können aus Elastomer gefertigt sein (vgl. Fig. 6 und 9a). Alternativ können in die Bohrung auch federbelastete Druckstücke, beispielsweise zylindrische oder kugelförmige Druckstücke als Reibelemente 26 eingesetzt sein.

Der Armaturenkörper 1.1 hat innenseitig eine Abtrennung 1.11 in Form einer Wand oder eines Bodens, wobei der Lagerkörper 23 unter Zwischenanordnung eines Abdichtungskörpers 28 an der Abtrennung 1.11 axial festgelegt ist. In der Abtrennung 1.11 sind mehrere Sacklöcher 29 zur Aufnahme einer entsprechenden Anzahl von Positionierstiften 28.1 ausgebildet. Die Positionierstifte 28.1 sind mit dem Abdichtungskörper 28 fest verbunden, beispielsweise einstückig mit diesem verbunden. In der Abtrennung 1.11 ist auch der Wasseranschluss 2 in Form einer ein Innengewinde aufweisenden Durchgangsbohrung ausgebildet (vgl. Fig. 2 und 4).

Der Lagerkörper 23 ist mittels der Hohlschraube 9, die in das Innengewinde des Armaturenkörpers 1.1 eingeschraubt ist, in dem Armaturenkörper 1.1 axial festlegbar bzw. festgelegt. Die Hohlschraube 9 weist an ihrem äußeren Ende einen umlaufenden, radial einwärts vorstehenden Steg 9.1 auf. Durch diesen Steg 9.1 wird der Drehkörper 22 im dem Lagerkörper 23 zusätzlich axial gesichert. Ein Elektro- und/oder Signalkabel 30 ist durch den Abdichtungskörper 28 hindurch wasserdicht zu der Sensorvorrichtung 10 geführt. Das andere Ende des Elektro- und/oder Signalkabels 30 ist an einer Elektronik der Mischeinheit 11 angeschlossen. Das Kabel 30 dient insbesondere der Spannungsversorgung der elektronischen Platine 10.2.

Auf der Platine 10.2, die den Hallsensor 10.1 trägt, sind ein oder mehrere Leuchtmittel 31, vorzugsweise Leuchtdioden angebracht, die Licht unterschiedlicher Farbe emittieren können. Vorzugsweise handelt es sich bei dem mindestens einen Leuchtmittel 31 um eine Multicolor-Leuchtdiode. Innerhalb der Multicolor-Leuchtdiode befinden sich mindestens drei Halbleiterkristalle, die jeweils Licht in einer der drei Primärfarben Rot, Blau und Grün erzeugen können. Die Kombination der Lichtfarben Rot und Grün ergibt dabei gelbes Licht; aus der Kombination der Lichtfarben Rot und Blau ergibt sich Magenta; und aus der Kombination der Lichtfarben Grün und Blau ergibt sich Cyan. Beispielsweise kann das Leuchtmittel 31 je nach Stellung des Hebels 4.1 des Bedienelements 4 rot, gelb, grün oder blau leuchten, um eine Einstellung von heißem Wasser, kaltem Wasser bzw. Wasser mittlerer Temperatur zu signalisieren. Um die eingestellte Wassertemperatur an der Sanitärarmatur 1 qualitativ anzuzeigen, ist die Hohlschraube 9 transparent ausgebildet und außenseitig vorzugsweise mit einem ringförmigen Lichtleiter 32 umgeben. Zudem ist vorzugsweise auch der Lagerkörper 23 zumindest in einem der Hohlschraube 9 zugewandten Körperabschnitt transparent ausgebildet, wobei dieser Körperabschnitt des Lagerkörpers 23 innenseitig mit einem ringförmigen Lichtleiter 33 versehen ist. Der Lichtleiter 33 ist so ausgebildet, dass er eine Umlenkfläche 33.1, beispielsweise eine konische Umlenkfläche 33.1 für weiterzuleitende Lichtstrahlen definiert (vgl. Fig. 7).

Die Ausführung der Erfindung ist nicht auf die in der Zeichnung dargestellten Ausführungsbeispiele beschränkt. Vielmehr sind zahlreiche Varianten denkbar, die auch bei einer von den dargestellten Beispielen abweichenden Gestaltung von der in den Ansprüchen angegebenen Erfindung Gebrauch machen. So kann die erfindungsgemäße Sanitärarmatur 1 beispielsweise auch in Form eines sogenannten Unterputz-Einhebelmischers ausgeführt sein, wobei dann ein Abschnitt des Armaturenkörper 1.1 für eine verdeckte Anordnung, z. B. eine Unterputzanordnung bestimmt ist, und wobei die Sanitärarmatur 1 dann anstelle eines Wasserauslaufs einen verdeckt anzuordnenden Wasserausgang aufweist, an welchem ein an einer Oberfläche, z. B. einer Dusch- oder Raumwand zugänglicher Anschlussbogen oder dergleichen installiert werden kann.

Wie sich der voranstehenden Beschreibung entnehmen lässt, bietet bzw. ermöglicht die vorliegende Erfindung folgende Vorteile:
- Intuitive Bedienbarkeit des Bedienelements analog zu einem Einhebelmischer
- Totraumfreie Wasserstrecke zum Zapfen von Trinkwasser sowie für Hygienespülung
- Ferngesteuertes Ausspülen und/oder Vorgeben von definierten Wassertemperaturen möglich
- Automatisiertes, bedarfsgerechtes Ausspülen von Warm- und/oder Kaltwasserleitung möglich
- Vom Betreiber zentral einstellbarer Trinkwasser-Temperaturbereich zur Sicherstellung eines Verbrühungsschutzes bzw. Energieeinsparung
- Temperaturgesteuerte Hygienespülung zur bedarfsgerechten Hygienespülung
- Hygienische Kartuschen-Technologie mit Keramikscheiben
- Reduzierung von Druckschlägen im Vergleich zur Verwendung von Magnetventilen
- Verbesserte Robustheit hinsichtlich im Trinkwasser enthaltener Partikel
- Totraumfreiheit der Kartuschen-Ventile mit Keramikscheiben

## Patentansprüche

1. Sanitärarmatur (1) umfassend
einen Armaturenkörper (1.1),
einen Wasseranschluss (2),
einen Wasserauslauf (3) oder Wasserausgang und
ein einen Hebel (4.1) aufweisendes bewegliches Bedienelement (4),
wobei der Hebel (4.1) zum Steuern einer Wassertemperatur um eine erste Drehachse (5) drehbar und zum Steuern eines Wasserflusses um eine zweite Drehachse (6) kippbar ist, und
wobei in dem Armaturenkörper (1.1) eine Sensorvorrichtung (10) zur Erfassung verschiedener Positionen des Hebels (4.1) relativ zu einer festgelegten Position des Armaturenkörpers (1.1) angeordnet ist.

2. Sanitärarmatur nach Anspruch 1, **dadurch gekennzeichnet, dass** die Sensorvorrichtung (10) einen Hallsensor (10.1) aufweist.

3. Sanitärarmatur nach Anspruch 1 oder 2, **dadurch gekennzeichnet, dass** das Bedienelement (4) einen um die erste Drehachse (5) drehbaren Drehkörper (22) aufweist, der in einem im Armaturenkörper (1.1) festlegbaren Lagerkörper (23) gelagert ist.

4. Sanitärarmatur nach Anspruch 3, **dadurch gekennzeichnet, dass** der Drehkörper (22) und/oder der Hebel (4.1) des Bedienelements (4) mit einem Reibelement (26, 27), vorzugsweise in Form eines federbelasteten Reibelements oder einklemmbaren Rings oder eingepressten, vorspringenden Elements aus Elastomer versehen sind/ist.

5. Sanitärarmatur nach Anspruch 3 oder 4, **dadurch gekennzeichnet, dass** der Drehkörper (22) miteinander fluchtende Bohrungen (22.2) aufweist, in denen ein Achskörper (25) zur Kipplagerung des Hebels (4.1) gelagert ist.

6. Sanitärarmatur nach einem der Ansprüche 3 bis 5, **dadurch gekennzeichnet, dass** der Drehkörper (22) Anschläge (22.3, 22.4) aufweist, die eine Kippbewegung des Hebels (4.1) begrenzen.

7. Sanitärarmatur nach einem der Ansprüche 3 bis 6, **dadurch gekennzeichnet, dass** der Lagerkörper (23) eine Drehung des Drehkörpers (22) begrenzende Anschläge (23.1) aufweist.

8. Sanitärarmatur nach einem der Ansprüche 3 bis 7, **dadurch gekennzeichnet, dass** der Armaturenkörper (1.1) innenseitig eine Abtrennung (1.11) in Form eines Bodens oder einer Wand aufweist, wobei der Lagerkörper (23) unter Zwischenanordnung eines Abdichtungskörpers (28) an der Abtrennung (1.11) axial festgelegt ist.

9. Sanitärarmatur nach Anspruch 8, **dadurch gekennzeichnet, dass** ein Elektro- und/oder Signalkabel (30) durch den Abdichtungskörper (28) hindurch zu der Sensorvorrichtung (10) hin wasserdicht geführt ist.

10. Sanitärarmatur nach einem der Ansprüche 3 bis 9, **dadurch gekennzeichnet, dass** in dem Drehkörper (22) ein Magnet (24) verschiebbar geführt ist, wobei der Magnet (24) durch eine Kipp- oder Schwenkbewegung des Hebels (4.1) verschiebbar ist.

11. Sanitärarmatur nach einem der Ansprüche 3 bis 10, **dadurch gekennzeichnet, dass** der Lagerkörper (23) mittels einer Hohlschraube (9), die in ein Innengewinde des Armaturenkörpers (1.1) einschraubbar ist, in dem Armaturenkörper (1.1) axial festlegbar ist.

12. Sanitärarmatur nach Anspruch 11, **dadurch gekennzeichnet, dass** die Hohlschraube (9) transparent ausgebildet ist.

13. Sanitärarmatur nach Anspruch 11 oder 12, **dadurch gekennzeichnet, dass** die Hohlschraube (9) außenseitig mit einem ringförmigen Lichtleiter (32) umgeben ist.

14. Sanitärarmatur nach einem der Ansprüche 11 bis 13, **dadurch gekennzeichnet, dass** die Hohlschraube (9) an ihrem äußeren Ende einen umlaufenden, radial einwärts vorstehenden Steg (9.1) aufweist.

15. Sanitärarmatur nach einem der Ansprüche 11 bis 14, **dadurch gekennzeichnet, dass** der Lagerkörper (23) zumindest in einem der Hohlschraube (9) zugewandten Körperabschnitt transparent ausgebildet ist, wobei dieser Körperabschnitt des Lagerkörpers (23) innenseitig vorzugsweise mit einem ringförmigen Lichtleiter (33) versehen ist.

16. Sanitärarmaturensystem mit einer Sanitärarmatur (1) nach einem der Ansprüche 1 bis 15 und einer der Sanitärarmatur (1) zugeordneten, mittels des Bedienelements (4) elektronisch steuerbaren Mischeinheit (11), wobei die Mischeinheit (11) einen Anschluss (12) für Kaltwasser, einen Anschluss (13) für Warmwasser, einen Anschluss (14) für eine mit der Sanitärarmatur (1) verbindbare Mischwasserleitung (15), mindestens zwei unabhängig voneinander steuerbare Ventile (16, 17) zur Einstellung von Temperatur und Volumenstrom des über den Anschluss für die Mischwasserleitung (15) abzugebenden Mischwassers und die Ventile (16, 17) steuernde Antriebe (18, 19) aufweist.
